# EUROPÄISCHE PATENTSCHRIFT

(11) **EP 2 260 245 B1**
(45) Veröffentlichungstag und Bekanntmachung des Hinweises auf die Patenterteilung: **07.01.2015**
(21) Anmeldenummer: 09717214.2
(22) Anmeldetag: 19.02.2009
(51) Int. Cl.: F24F 11/04

(54) **VORRICHTUNG ZUM MESSEN UND REGELN EINES VOLUMENSTROMS IN EINEM LÜFTUNGSROHR**
DEVICE FOR MEASURING AND REGULATING A VOLUME FLOW IN A VENTILATION PIPE
DISPOSITIF DE MESURE ET DE RÉGULATION D'UN DÉBIT VOLUMIQUE DANS UN TUBE D'AÉRATION

(30) Priorität: 07.03.2008 CH 334082008
(43) Veröffentlichungstag der Anmeldung: 15.12.2010
(73) Patentinhaber: Belimo Holding AG, 8340 Hinwil (CH)
(72) Erfinder: EGLI, Alexander, CH-8627 Grüningen (CH); HOLOCH, Philip, CH-8484 Neschwil (CH); NIEDERHAUSER, Urs, CH-8422 Pfungen (CH); LEHNERT, Frank, CH-8630 Rüti (CH)
(74) Vertreter: Roshardt, Werner Alfred
(86) Internationale Anmeldenummer: PCT/CH2009/000068
(87) Internationale Veröffentlichungsnummer: WO 2009/109056

(56) Entgegenhaltungen:
- EP-A- 1 614 975
- WO-A-2005/053975
- DE-A1- 4 424 652
- US-A- 4 375 667

## Beschreibung

### Technisches Gebiet

Die Erfindung betrifft eine Vorrichtung zum Messen und Regeln eines Volumenstroms in einem Lüftungsrohr gemäss Oberbegriff des Anspruchs 1.

### Stand der Technik

Für die Regelung der Belüftung von Räumen ist es nötig, den Zu- bzw. Abluftstrom zu messen. Es gibt z. B. stabförmige Sonden, die im Rohrinneren montiert werden können und den Sensor etwa im Zentrum des Rohrquerschnitts, d. h. am Ort der grössten Strömungsgeschwindigkeit positionieren. Diese müssen jedoch zusätzlich zu den Belüftungsklappen und Antrieben montiert werden, was den Installationsaufwand für das gesamte Lüftungssystem erhöht.

Aus der WO 2005/053975 (Belimo) ist eine Vorrichtung zur Regelung eines Luftstroms in einem Lüftungsrohr bekannt. An der im Lüftungsrohr angeordneten Halterung der Luftklappe sind zwei Druckmesszellen derart integriert, dass der Volumenstrom via Differenzdruck bestimmt werden kann. Die Messzellen sind zum Beispiel jeweils stirnseitig an den diametral gegenüberliegenden Enden der schwenkbaren Halterung angeordnet, wobei die Halterung schräg zur Längsachse des Lüftungsrohrs steht und sich praktisch von einer Wandung zur anderen erstreckt.

Das Bestimmen des Volumenstroms über Druckmesszellen hat gewisse Nachteile. Es ist bekannt, dass thermische Anemometer (d.h. Anemometer, welche auf einer Temperaturmessung basieren, nämlich auf der Ermittlung des von der Strömungsgeschwindigkeit des Mediums abhängigen Abkühlungsgrad eines Heizelements) einen grösseren Messbereich haben. Es können insbesondere auch relativ niedrige Strömungsgeschwindigkeiten gemessen werden. Schliesslich ist der Sensor genau und kompakt.

Die Verwendung von thermischen Anemometern ist für verschiedene Anwendungen an sich bekannt. In der DE 10 2007 017 682 A1 (ebm-pabst) wird ein solcher Sensor unmittelbar hinter einem Ventilator angeordnet, um den Volumenstrom des Ventilators zu bestimmen und die Drehzahl des Ventilators zu regeln.

In der EP 0 339 626 ist eine eigenständige Messonde auf der Basis eines thermischen Anemometers beschrieben, welche unempfindlich gegen orientierungsmässige Justagefehler ist und schnell auf Strömungsänderungen anspricht. Auf der senkrecht zur Strömungsrichtung ausgerichteten Stabsonde ist beidseits des Sensors je eine zylindersymmetrische Anströmkappe vorgesehen, so dass zusammen mit dem verjüngten Sensorabschnitt eine hantelförmige Gestalt gebildet wird. Die Anströmkappen sind z.B. kegelförmig oder kugelkalottenförmig, wobei die ebene Grundfläche des Kegels bzw. der Kugelkalotte zum Sensorabschnitt hin zeigt und sich eine sprunghafte Querschnittsänderung ergibt. Mit den spiegelsymmetrischen Anströmkappen wird erreicht, dass die Zylindersymmetrie hinsichtlich der Strömungsverhältnisse gebrochen wird zugunsten einer quasi-sphärischen Strömungsrichtungscharakteristik. Die hantelförmige Ausbildung soll eine Richtungsunabhängigkeit des Sensors über einen grossen Anströmwinkelbereich erzielen.

Aus der DE 10 2005 038 598 (Robert Bosch GmbH) ist ein Heissfilmluftmassenmesser bekannt, welcher im Ansaugtrakt einer Verbrennungskraftmaschine einsetzbar ist (mit Strömungsgeschwindigkeiten von 0 - 60 m/s). Zur Vermeidung von Oberflächenkontamination und damit zusammenhängender Signaldrift ist ein Strömungsablöseelement vorgesehen. Dieses bewirkt, dass die Ölpartikel sich unmittelbar hinter dem Strömungsablöseelement in einem strömungsmässigen "Totwassergebiet" absetzen. Die Ablösekante sollte gegenüber der Ebene des Sensorchips um mindestens 15 - 40 µm erhöht und gegenüber dem Sensorbereich um mindestens 30 - 60 µm und maximal 200 - 600 µm vorgelagert sein. (Die Fläche des Sensors beträgt beispielsweise 1600 µm x 500 µm.)

Aus der EP 0 578 029 B1 (Trox) ist ein Sensorsystem zum Überwachen und Detektieren der Strömungsrichtung eines Abluftstroms bekannt. Zwei elektrisch beheizte Heissleiter sind in Strömungsrichtung hintereinander angeordnet. Ein Barriereelement sorgt dafür, dass das jeweils stromabwärts liegende Heissleiterelement im Windschatten der Strömung liegt und somit nicht gekühlt wird. Auf diese Weise wird eine Differenztemperatur ermittelt, welche auf die Strömungsrichtung rückschliessen lässt.

Die DE 44 24 652 (LTG Lufttechnische GmbH) zeigt eine Lüftungsregelung mit Sensoren zur Ermittlung der Strömungsgeschwindigkeit. Die Sensoren werden bewusst nahe bei der Lüftungsklappe vorgesehen, um eine kurze Baugrösse zu erreichen. Die damit verbundene Störung des Sensors (welche von der Klappenstellung abhängt) wird in Kauf genommen und elektronisch kompensiert. Als Sensor kann eine statische oder eine dynamische Druckmessvorrichtung zum Einsatz kommen. Ferner ist eine Variante angedeutet, bei welcher die dynamische Messung mittels Anemometer nicht in einer Bypass-Leitung, sondern ohne Strömungsblende direkt im Lüftungsrohr erfolgt. In allen gezeigten Ausführungsbeispielen sind die Sensoren an der Rohrwand vorgesehen.

Bei der Verwendung von konventionellen Volumenstromsensoren in Lüftungsrohren hat sich gezeigt, dass die Sensorsignale durch die Geometrie des Leitungsverlaufs beeinflusst werden. Das hat zur Folge, dass darauf zu achten ist, ob der Sensor unmittelbar nach einem gekrümmten Rohrstück oder nach einem geraden montiert wird. Das Installieren von Volumenstromsensoren in einem Regelsystem wird dadurch erschwert und führt zu einem erhöhten Planungs- und Installationsaufwand. Werden diese Einflüsse beim Einbau des Sensors nicht berücksichtigt, ergeben sich Messfehler.

### Darstellung der Erfindung

Aufgabe der Erfindung ist es, eine dem eingangs genannten technischen Gebiet zugehörige Vorrichtung anzugeben, die den Volumenstrom unabhängig von der Geometrie des Leitungsrohrs zuverlässig messen und regeln kann. Insbesondere soll eine Anordnung geschaffen werden, die sich integral und kostengünstig mit dem Antrieb und der Regelung einer Lüftungsklappe realisieren lässt.

Die Lösung der Aufgabe ist durch die Merkmale des Anspruchs 1 definiert. Gemäss der Erfindung ist als Sensorelement ein thermisches Anemometer mit einer Sensorfläche zum Messen des Volumenstroms vorgesehen ist.

Durch das Kombinieren einer motorisch steuerbaren Lüftungsklappe und eines thermischen Anemometers wird es möglich, auf kostengünstige Weise eine zuverlässige Regelung des Volumenstroms zu erreichen. Die Messung mit einem thermischen Anemometer erweist sich als einfacher und zuverlässiger als die bei Lüftungsklappen vorbekannte Druckdifferenzmessung. Die Halterung, mit welcher das Sensorelement direkt oder indirekt verbunden ist, erlaubt es, dass die Sensorfläche an einem gewünschten Ort (vorzugsweise auf der Längsmittelachse des Lüftungsrohrs) platziert werden kann.

Gemäss der Erfindung ist das thermische Anemometer, insbesondere die Sensorfläche an einem Gehäuse des Antriebs angeordnet. Die Vorrichtung kann somit als Baueinheit ausgeführt sein, welche als ganze vollständig innerhalb des Lüftungsrohrs montierbar ist. Es müssen also nicht separate Sensoren montiert werden. Es ist aber auch möglich, den Sensor als separates Modul, ev. mit integrierter Regelelektronik für die Volumenstromregelung mittel Lüftungsklappe auszubilden.

Das Gehäuse ist bei der Erfindung an der Halterung angebracht, welche derart ausgebildet ist, dass das Sensorelement im Wesentlichen im Zentrum des Lüftungsrohrs platziert wird. Die Halterung kann verstellbar oder auswechselbar sein, so dass das Gehäuse in verschieden grossen Lüftungsrohren korrekt, d. h. mit dem Sensorelement im Zentrum des Lüftungsrohrs, montiert werden kann. So kann z. B. für jede übliche Querschnittsgrösse des Lüftungsrohrs eine spezifische Halterung vorgesehen sein. Der Monteur braucht dann nur die für den jeweiligen Rohrquerschnitt bestimmte Halterung zu montieren, um sicherzustellen, dass das Sensorelement am messtechnisch optimalen Ort ist.

Eine in der Baueinheit integrierte elektronische Steuerung sorgt dafür, dass der Volumenstrom mit der Lüftungsklappe entsprechend einem vorgegebenen Sollwert geregelt werden kann. Der Sollwert wird von einer Systemzentrale der HLK-Anlage vorgegeben, Die Steuerung kann auch in einem baulich vom Antrieb getrennten Gehäuse zur Verfügung gestellt werden. Dies kann dann sinnvoll sein, wenn bestehende Antriebe mit einer Anemometergestützten Regelung nachgerüstet werden sollen.

Vorzugsweise ist die elektronische Steuerung auf einer bedruckten Leiterplatte (printed circuit board = PCB) angeordnet, welche teilweise innerhalb und teilweise ausserhalb des Gehäuses des Antriebs liegt. Die Sensorfläche kann in diesem Fall auf dem ausserhalb des Antriebsgehäuses liegenden (d.h. der Strömung ausgesetzten) Teil der Leiterplatte ausgebildet sein. Es ist zwar vorteilhaft, aber nicht zwingend, dass die elektronische Steuerung für den Antrieb und die Messelektronik für das thermische Anemometer auf der selben Leiterplatte sind.

Gemäss einer besonders bevorzugten Ausführungsform ist das Sensorelement, insbesondere die Sensorfläche, in einer Ausnehmung des Gehäuses des Antriebs oder in einer Einbuchtung oder Vertiefung dessen Gehäusewand angeordnet. Das Sensorelement ist dabei mit einer innerhalb des Gehäuses angeordneten elektronischen Schaltung verbunden. Die elektronische Schaltung kann auch in einer Baueinheit untergebracht sein, welche separat zum Antriebsgehäuse ist. Die separate Baueinheit kann auch an der Aussenwand des Antriebsgehäuses über eine Klammer, einen Stecker oder auf andere Weise befestigbar sein.

Bei einer als ganzes im Lüftungsrohr angeordneten erfindungsgemässen Vorrichtung weist der Antrieb vorzugsweise eine schwenkbare Halterung für die Lüftungsklappe auf. Die Lüftungsklappe ist an der genannten Halterung auswechselbar befestigt, so dass die Vorrichtung für verschiedene Querschnitte von Lüftungsrohren einsetzbar ist, indem je nach Querschnittsgrösse des Lüftungsrohrs die passende Lüftungsklappe angebracht werden kann. Die Befestigung wird vorzugsweise durch einen Schnapp- oder Klemmmechanismus erreicht, so dass ein Monteur die Klappe ohne Werkzeuge (z. B. Schraubenzieher) auswechseln kann.

Die Lüftungsklappenhalterung kann auch fest mit der Lüftungsklappe verbunden sein. Die Auswechselbarkeit kann unter Umständen auch dadurch erreicht werden, dass die Lüftungsklappenhalterung mit einer lösbaren Schraub- oder Klemmbefestigung auf der Drehachse des Antriebs sitzt.

Gemäss einer besonders bevorzugten Ausführungsform ist vorgelagert zum Sensorelement ein Turbulenzerzeugungselement vorgesehen, welches derart ausgebildet und von der Sensorfläche beabstandet ist, dass im Bereich der Sensorfläche gezielt eine erhöht turbulente Strömung erzeugt wird von der Art, wie sie z. B. nach einem Rohrbogen im Lüftungsrohr entsteht. Wäre die Strömung ohne das Turbulenzerzeugungselement laminar, wird sie durch dieses turbulent und ist die Strömung bereits turbulent, so wird ihr Turbulenzgrad im Bereich der Sensorfläche erhöht bzw. verstärkt.

Indem am Ort der Sensorfläche gezielt eine Turbulenz (d. h. eine bestimmte Strömungsart) erzeugt wird, liegen am Ort des Sensors definierte Messbedingungen vor und die Messung wird unabhängig davon, ob die Strömung vor dem Sensor insgesamt laminar oder turbulent ist bzw. ob der Turbulenzgrad verhältnismässig hoch oder tief ist. Das Turbulenzerzeugungselement soll eine maximale Turbulenz erzeugen, welche grösser ist, als eine von einem Rohrkrümmer oder einer Kanaleinbaute bewirkte Turbulenz. Das Turbulenzerzeugungselement soll die Turbulenz (nur) soweit erhöhen, dass die Messwerte eine optimale Genauigkeit unter den verschiedenen Anströmungen erreichen

Es hat sich gezeigt, dass anders als bei vorbekannten Sensoranordnungen die Messergebnisse nicht mehr davon abhängen, ob die Leitung vor der Messstelle gerade oder gekrümmt ist. Die Planung von HLK-Systemen wird dadurch vereinfacht und das HLK-System ist weniger fehler- bzw. störungsanfällig.

Vorzugsweise ist das Turbulenzerzeugungselement eine quer zur Strömungsrichtung verlaufende Abrisskante, welche in Strömungsrichtung um mindestens 3 mm (z. B. 1-2 cm) gegenüber der Sensorfläche vorgelagert ist und um mindestens 0,5 mm (z. B. 1-2 mm) gegenüber der Sensorfläche erhöht ist. Hinter der Abrisskante bildet sich eine Strömungszone mit hohem bzw. erhöhtem Turbulenzgrad. Durch die geeignete Wahl der Abstände zwischen Abrisskante und Sensorfläche wird am Ort der Messung stets eine Strömung mit hoher Turbulenz herrschen.

Die erfindungsgemässe Anordnung der Abrisskante unterscheidet sich von derjenigen gemäss DE 10 2005 038 598 wesentlich durch die Wirkung am Ort der Sensorfläche. Bei der Anordnung gemäss DE 10 2005 038 598 wird am Ort der Sensorfläche eine möglichst laminare Strömung angestrebt und die Turbulenz mit dem "Totwassergebiet" soll vollständig vor der Sensorfläche stattfinden.

Anstelle einer geraden Abrisskante können auch andere turbulenzerzeugende Elemente vorgesehen sein, wie z.B. kammartig in die Strömung ragende Strukturen.

Zusätzlich zum Turbulenzelement kann nachgelagert zur Sensorfläche ein Strömungselement vorgesehen sein, welches sich im Querschnitt in Strömungsrichtung verbreitert, wobei ausgehend von einem Höhenniveau der Sensorfläche eine Höhe erreicht wird, welche grösser ist als die Höhe der Abrisskante des Turbulenzerzeugungselements gegenüber der Sensorfläche. Es hat sich gezeigt, dass mit einem solchen Strömungselement die Sensorcharakteristik bei höheren Strömungsgeschwindigkeiten verbessert werden kann.

Die Form des nachgelagerten Strömungselements entspricht im Profil etwa einer ansteigenden Rampe. Vorzugsweise hat sie keine abrupten Kanten und Ecken, sondern hat gerundete Übergänge. Ist der Sensor in einem Antriebsgehäuse für eine Lüftungsklappe oder dergleichen integriert, kann das Ende der Rampe mit der parallel zur Strömungsrichtung verlaufenden Aussenwand des Gehäuses zusammenfallen.

Das nachgelagerte Strömungselement hat beispielsweise einen Abstand von der Sensorfläche, der mindestens 3 mm (z. B. 1-2 cm) beträgt. Das Strömungselement schliesst also nicht unmittelbar an die Sensorfläche an. Für die Strömungsgeschwindigkeiten im Bereich der Lüftungstechnik (welche typischerweise im Bereich von 0,5 - 7 m/s liegen) hat es sich als vorteilhaft erwiesen, wenn die Sensorfläche in Strömungsrichtung betrachtet etwa in der Mitte zwischen Abrisskante und Strömungselement angeordnet ist.

Soll der Sensor nur bei relativ geringen Strömungsgeschwindigkeiten eingesetzt werden, kann das nachgelagerte Strömungselement weniger hoch ausgebildet und/oder weiter entfernt von der Sensorfläche angeordnet werden. Es kann unter Umständen auch ganz weggelassen werden.

Vorgelagert zur Sensorfläche ist ein Leitelement ausgebildet, an deren hinteren (der Sensorfläche zugewandten) Ende das Turbulenzerzeugungselement (z.B. die Abrisskante) angebracht ist. Am vorderen (der Sensorfläche abgewandten) Ende des Leitelements ist eine quer zur Strömungsrichtung ausgerichtete Auffangfläche für Schmutzpartikel vorgesehen. Das Leitelement führt die Strömung auf die Abrisskante zu und hat eine aerodynamische Form mit geringem Strömungswiderstand. Damit die Auffangfläche eine gute Wirkung hat, ist sie quer zur Strömungsrichtung typischerweise mehr als 1 mm (z. B. einige wenige Millimeter) breit. Da das gegen die Strömungsrichtung zeigende Ende des Leitelements einen möglichst geringen Strömungswiderstand aufweisen soll, ist es abgerundet. Als Auffangfläche ist derjenige Teil der Oberfläche bezeichnet, dessen Flächennormale einen Winkel von mehr als 135° zur Hauptströmungsrichtung im Leitungsrohr hat.

Das Leitelement dient dazu, die Strömung auf die Abrisskante zuzuführen und vermeidet, dass Turbulenzen vorzeitig und unkontrolliert entstehen.

Um den Volumenstrom im Leitungsrohr zu bestimmen, ist die Strömungsgeschwindigkeit im Zentrum des Rohrquerschnitts und zwar in Längsrichtung des Leitungsrohrs von Interesse. Um die Empfindlichkeit des Sensorelements in (unerwünschten) anderen Richtungen zu vermindern, kann die Vorrichtung seitlich der Sensorfläche mindestens ein Strömungsselektionselement aufweisen. Die Strömung läuft also zwischen den (in Strömungsrichtung seitlich platzierten) Strömungsselektionselementen hindurch. Die genannten Strömungsselektionselemente können sich von dem Turbulenzerzeugungselement bis zum nachgelagerten Strömungselement erstrecken.

Das Sensorelement weist vorzugsweise ein SMD-Bauteil enthaltend einen Temperatursensor (beispielsweise Pt-100 Element) und einen plattenförmigen Träger für das SMD-Bauteil auf. Der Träger ist z.B. eine Epoxidharzplatte, wie sie als Träger für elektronische Schaltungen üblich ist. Die Sensorfläche ist durch eine Kupferschicht gebildet. Der SMD-Bauteil ist im Bereich der Kupferschicht oder in unmittelbarer Nähe zu dieser montiert.

Bei einer solchen Ausführungsform kann auf ein Leitelement auch verzichtet werden. Wird der plattenförmige Träger in einem gewissen Winkel (von z.B. 2° -10°) schräg zur Strömungsrichtung ausgerichtet (die Flächennormale steht dann in einem Winkel von 92 - 100° zur Strömungsrichtung), kann die Abrisskante direkt durch die der Strömung zugewandten Kante des Trägers gebildet werden.

Gemäss einer besonders bevorzugten Ausführungsform ist der Träger derart an der Halterung angebracht, dass er beidseits von der Strömung getroffen wird. Er weist auch beidseits eine Kupferbeschichtung auf, wobei die beiden Kupferschichten in gutem thermischem Kontakt zueinander stehen. Durch die Verwendung von zwei Sensorflächen ergibt sich eine vorteilhafte (örtliche) Mittelung des Messwerts.

Die Temperaturmessung kann auch mit anderen technischen Mitteln erfolgen als mit einem SMD-Bauteil (z.B. mit diskreten Schaltungselementen). Es ist auch denkbar, die Sensorfläche und die Temperaturmesselektronik produktionstechnisch zu einem anwendungsspezifischen Volumenmessgerät zu kombinieren.

Vorzugsweise sind das Turbulenzerzeugungselement und das nachgelagerte Strömungselement bei beidseitiger Nutzung des plattenförmigen Trägers im Querschnitt spiegelsymmetrisch bezüglich einer durch den plattenförmigen Träger definierten geometrischen Mittelebene ausgebildet.

Es ist aber auch denkbar, dass zwar beide Seiten des Trägers genutzt werden, dass aber die Strömungsgeometrie unterschiedlich ist. Dies könnte z.B. dann sinnvoll sein, wenn mit den unterschiedlichen Strömungsgeometrien der Sensor auf unterschiedliche Bereiche der Strömungsgeschwindigkeit optimiert werden soll. So könnte z.B. die eine Seite des Trägers auf niedrige bis mittlere Strömungsgeschwindigkeiten besonders empfindlich sein, und die andere Seite auf mittlere bis höhere. In der Summe ergibt sich dann eine Kennlinie, die sowohl in unteren als auch in oberen Bereichen der Strömungsgeschwindigkeit gut ist.

In einer vorteilhaften Ausführungsform sind das nachgelagerte Strömungselement und die seitlichen Strömungsselektionselemente als durchgehende, halbkreisartige, kegelmantelförmige sich öffnende Fläche ausgebildet. Bildlich gesprochen bilden die seitlichen Strömungsselektionselemente und das nachgelagerte Strömungselement eine Fläche wie der Rand bei einem tiefen Suppenteller. Die Sensorfläche wäre dann der Boden des gedachten Suppentellers.

Es ist aber auch möglich, die seitlichen Strömungsselektionselemente separat vom nachgelagerten Strömungselement auszugestalten. In der Regel werden die seitlichen Strömungselemente symmetrisch bezüglich der Hauptströmungsrichtung (d.h. bezüglich einer zur Sensorfläche senkrechten Längsmittelebene der Vorrichtung bzw. des Lüftungsrohrs) ausgebildet.

Das Leitelement ist in seinem bezüglich der Abrisskante vorgelagerten Bereich im Querschnitt mit Vorteil tropfenförmig. Im Unterschied zur Tropfenform läuft das Profil des Leitelementes stromabwärts nicht spitz aus, sondern endet mit der bzw. den Abrisskanten.

Das Leitelement kann im Querschnitt auch ähnlich zu einem Flugzeugflügel sein oder eine linsenartige Form haben.

Für den praktischen Einsatz ist es von Vorteil, wenn die Vorrichtung eine integrierte Einheit aus Lüftungsklappe, Antrieb und Regelung ist. Motor, Getriebe und Regelschaltung sind in diesem Fall in einem Gehäuse untergebracht, an dessen Aussenseite die betätigbare Lüftungsklappe und der Sensor vorgesehen sind. Die genannte Einheit wird als Ganzes im Lüftungsrohr (also im Strömungsbereich) montiert. Der Sensor ist derart am Gehäuse angeordnet, dass er etwa im Zentrum des Lüftungsrohrs zu liegen kommt. Thermisch soll das Sensorelement vom Antrieb im Gehäuse gut entkoppelt sein.

Der Monteur braucht nur noch diese eine Einheit mechanisch und elektrisch anzuschliessen, um an einem bestimmten Ort eine Lüftungskontrolle zu bewirken. Eine solche Einheit ist kompakt und kostengünstig in der Installation. Es sind keine Schläuche innerhalb oder ausserhalb des Lüftungsrohrs zu verlegen und keine separaten Messstäbe anzuschliessen. Natürlich ist es nicht ausgeschlossen, dass die Sensorvorrichtung gehäusemässig unabhängig von einem Antrieb benutzt wird. Es ist durchaus denkbar, die erfindungsgemässe Sensoranordnung in Form eines Moduls bereit zu stellen, mit welchem bestehende Lüftungsklappenantriebe nachgerüstet werden können.

Um die Messung bezüglich der Mediumstemperatur zu kalibrieren, wird an anderer Stelle des Gehäuses ein Temperatursensor angebracht. Der Temperatursensor kann grundsätzlich auch getrennt vom Gehäuse vorgesehen sein, was aber den Nachteil einer aufwändigeren Installation der ganzen Vorrichtung hat.

Das Sensorelement ist mit Vorteil in einer Ausnehmung bzw. Einbuchtung des Gehäuses angebracht und mit einer innerhalb des Gehäuses angeordneten Elektronik verbunden. Die Ausnehmung ist z.B. so gestaltet, dass sie von der Printplatte, auf welcher die elektronischen Bauteile der Anstriebsteuerung und Klappenregelung aufgebaut sind, einen Bereich frei gibt. Sensorelement und Ansteuerung können daher in vorteilhafter Weise auf einer gemeinsamen Platte untergebracht sein. Durch die Begrenzungswände der Ausnehmung können gleichzeitig das nachgelagerte Strömungselement und die seitlichen Strömungsselektionselemente gebildet werden.

Es ist alternativ möglich, die Printplatte aus dem sonst quaderförmigen Gehäuse heraus ragen zu lassen, ohne dass eine Einbuchtung am Gehäuse vorgesehen ist. Das Sensorelement und die Auswerteelektronik können auch separat vom Antriebsgehäuse realisiert werden.

An dem Gehäuse kann eine Befestigungseinrichtung angebracht sein, welche die Montage des Gehäuses im Lüftungsrohr derart ermöglicht, dass das Sensorelement im Wesentlichen im Zentrum des Lüftungsrohrs platziert werden kann. Lüftungsklappe, Antrieb und Regelung bilden also eine im Inneren des Leitungsrohrs montierbare kompakte Baueinheit.

Der Antrieb kann aber auch ausserhalb des Lüftungsrohrs angeordnet sein. Die Messvorrichtung ist dann vor der Lüftungsklappe im Leitungsrohr montiert.

Es können an dem Gehäuse nach dem gleichen konstruktiven Prinzip auch weitere Sensoren angeordnet sein, welche für die Luftqualitätsbestimmung genutzt werden können. Zu erwähnen sind z. B. Feuchtigkeitssensoren oder Gassensoren, welche ebenfalls auf dem aus dem Gehäuse heraus ragenden Teil der Leiterplatte platziert sein können. Wird mit einem Gassensor (z.B. ein CO2 oder VOC) die Zusammensetzung der Abluft gemessen, kann ein Rückschluss auf die Luftqualität im Raum gezogen werden. Bei schlechter Luftqualität wird z.B. der Volumenstrom erhöht, bei guter reduziert.

Die genannten weiteren Sensoren können auch auf einem separaten Träger oder an einem vom thermischen Anemometer entfernten Ort an der Aussenseite des Gehäuses angebracht sein. Vorzugsweise sind alle Sensoren auf der selben Leiterplatte angeordnet oder zumindest elektronisch mit der selben Leiterplatte bzw. deren Elektronik verbunden. Die weiteren Sensoren können in der gleichen Weise wie des Heissfilm-Luftmassenanemometer hinter einem Leitelement gegen Schmutz geschützt angeordnet werden.

Wird ein Bewegungsmelder mit dem Antrieb verbunden, um die Anwesenheit von Personen im belüfteten Raum zu detektieren, kann der Volumenstrom entsprechend anders (z.B. höher) eingestellt werden.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: eine schematische perspektivische Darstellung einer Baueinheit mit Lüftungsklappe, Antrieb und Volumenstromsensor;
- Fig. 2: eine vergrösserte perspektivische Darstellung des Sensorelements und der mit diesem zusammenwirkenden strömungstechnischen Bauteile;
- Fig. 3: eine vergrösserte Darstellung eines Querschnitts der Sensoranordnung;
- Fig. 4: eine schematische perspektivische Darstellung einer weiteren Ausführungsform, bei welcher das Sensorelement vom Antrieb der Lüftungsklappe baulich getrennt ist.

Grundsätzlich sind in den Figuren gleiche Teile mit gleichen Bezugszeichen versehen.

### Wege zur Ausführung der Erfindung

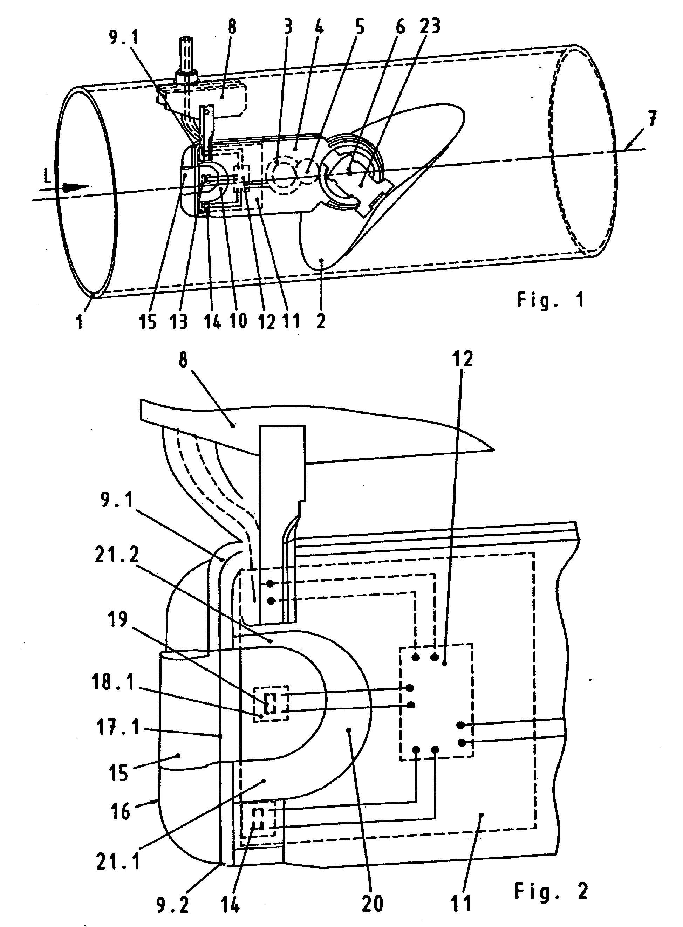

Fig. 1 zeigt ein kreisrundes Lüftungsrohr 1 mit einer Längsmittelachse 7. Im Inneren des Lüftungsrohrs 1 ist eine verstellbare Lüftungsklappe 2 angebracht, mit welcher der Luftstrom in Strömungsrichtung L stufenlos gedrosselt werden kann. Die Lüftungsklappe 2 wird mit einem Motor 3 betätigt, welcher in einem flachen Gehäuse 4 untergebracht ist und über ein untersetzendes Getriebe 5 auf die Drehachse 6 der Lüftungsklappe 2 wirkt. Die Drehachse 6 ist senkrecht zur Längsmittelachse 7 ausgerichtet. An der Drehachse 6 ist die Halterung 23 für die Lüftungsklappe 2 befestigt. Die Lüftungsklappe 2 ist vorzugsweise flexibel ausgeführt, wie z. B. in der WO 2008/019519 (Belimo) beschrieben. Zudem ist die Lüftungsklappe 2 auswechselbar an der Halterung 23 fixiert, so dass je nach Durchmesser des Lüftungsrohrs 1 passende Lüftungsklappen 2 eingesetzt werden können.

Das ungefähr rechteckige Gehäuse 4 wird an seiner Ecke 9.1 durch eine Halterung 8, welche an der Innenseite des Lüftungsrohrs 1 angebracht ist, im Zentrum des Lüftungsrohrs 1 gehalten. Das längliche Gehäuse 4 erstreckt sich dann ausgehend von der Position der Halterung 8 stromabwärts ungefähr auf der Längsmittelachse 7. Die Halterung 8 des Gehäuses ist hier als Stab mit bestimmter Länge ausgebildet. Um den selben Antrieb für unterschiedliche Querschnitte des Lüftungsrohrs einsetzen zu können, ist das Gehäuse 4 über eine einfache Schraubverbindung an der Halterung 8 befestigt. Je nach Rohrquerschnitt kann das Gehäuse 4 an einer grösseren oder kleineren Halterung 8 angebracht werden, so dass das Gehäuse 4 und insbesondere die Sensorfläche des Sensorelements immer etwa im Zentrum des Lüftungsrohrs 1 ist.

Die Datenverbindung zu einem zentralen Leitsystem und die Stromversorgung erfolgen über eine Verkabelung, welche durch die Halterung 8 von ausserhalb des Lüftungsrohrs 1 zugeführt ist.

An dem der Lüftungsklappe 2 abgewandten Ende des Gehäuses 4, d.h. am stromaufwärts gerichteten Ende des Gehäuses 4, ist eine Ausnehmung 10 vorgesehen. Diese Ausnehmung 10 ist etwa in der Mitte der stromaufwärts gerichteten Gehäuseschmalseite (welche sich im Wesentlichen von der Ecke 9.1 zur Ecke 9.2 erstreckt) und liegt bei korrekter Montage des Gehäuses 4 auf der Längsmittelachse 7 des Lüftungsrohrs 1.

In der Draufsicht auf die Hauptseite des Gehäuses 4 ist die Ausnehmung 10 ungefähr halbkreisförmig mit einem kurzen geraden Führungsabschnitt am offenen Ende des Halbkreises. Die Breite des kurzen geraden Führungsabschnitts entspricht etwa 1/2 bis 1/3 der Breite des (ungefähr rechteckigen) Gehäuses 4.

Die Ausnehmung 10 gibt einen bestimmten Oberflächenbereich der Leiterplatte 11 frei, welche im hinteren (d.h. stromaufwärts liegenden) Teil des Gehäuses 4 untergebracht ist. Auf der Leiterplatte 11 ist eine elektronische Schaltung 12 zur Steuerung des Motors 3 bzw. zum Stellen der Lüftungsklappe 2 entsprechend dem von einem zentralen Leitsystem vorgegebenen Volumenstrom angeordnet. In der Fig. 2 sind schematisch die Leitungen von der elektronischen Schaltung 12 zum Motor 3, zur externen Leitzentrale, zum Sensorelement 13 des Volumenstromsensors d.h. zum SMD-Bauteil 19 und zum Temperatursensor 14 eingezeichnet.

Fig. 2 zeigt einen vergrösserten Ausschnitt des stromaufwärts liegenden Gehäuseteils mit den erfindungsgemässen strömungstechnischen Elementen. Vorgelagert (d.h. stromaufwärts) zur Ausnehmung 10 ist ein Leitelement 15 vorgesehen. Dieses erstreckt sich im Wesentlichen über die ganze Breite der Ausnehmung 10. Stromaufwärts (d.h. an der dem Gehäuse 4 abgewandten Seite) hat das Leitelement 15 eine im Profil abgerundete Auffangfläche 16 für Schmutzpartikel. An dem stromabwärts liegenden Ende des Leitelements 15 ist eine Abrisskante 17.1 ausgebildet. Diese hat einen bestimmten Abstand zum Sensorelement 13, welches durch eine Kupferfläche 18.1 und ein SMD-Bauteil 19 gebildet wird. Der Abstand ist so gewählt, dass Strömungswirbel, welche hinter der Abrisskante entstehen, die Kupferfläche 18.1 bedecken.

Der SMD-Bauteil 19 ist auf einer Kupferfläche 18.1 der Leiterplatte 11 fixiert. Dadurch wird die effektive Messfläche vergrössert. Zum einen wird so die Störanfälligkeit vermindert, da eine punktuelle Verschmutzung den Sensor nicht lahm legen kann, und zum anderen kann eine gewisse Mittelung des zu messenden Temperatureffekts erreicht werden.

Die rampenförmige Begrenzungswand der Ausnehmung 10 bildet im Bereich des geraden Führungsabschnitts der Ausnehmung die strömungstechnischen Richtungsselektionselemente 21.1, 21.2. Es werden mit der bezüglich des Sensorelements 13 seitlichen Begrenzungswand also die Einwirkungen derjenigen Strömungskomponenten auf das Sensorelement 13 gedämpft, welche nicht in Richtung der Längsmittelachse 7 laufen.

Die rampenförmige Begrenzungswand der Ausnehmung 10 im halbkreisförmigen Bereich stromabwärts des Sensorelements 13 stellt ein nachgelagertes Strömungselement 20 dar, welches die Kennlinie des Volumenstromsensors bei höheren Strömungsgeschwindigkeiten verbessert. Insgesamt bilden die Richtungsselektionselemente 21.1, 21.2 und das nachgelagerte Strömungselement 20 näherungsweise eine durchgehende, gekrümmte, sich mit zunehmender Distanz von der Leiterplatte 11 sich öffnende Fläche.

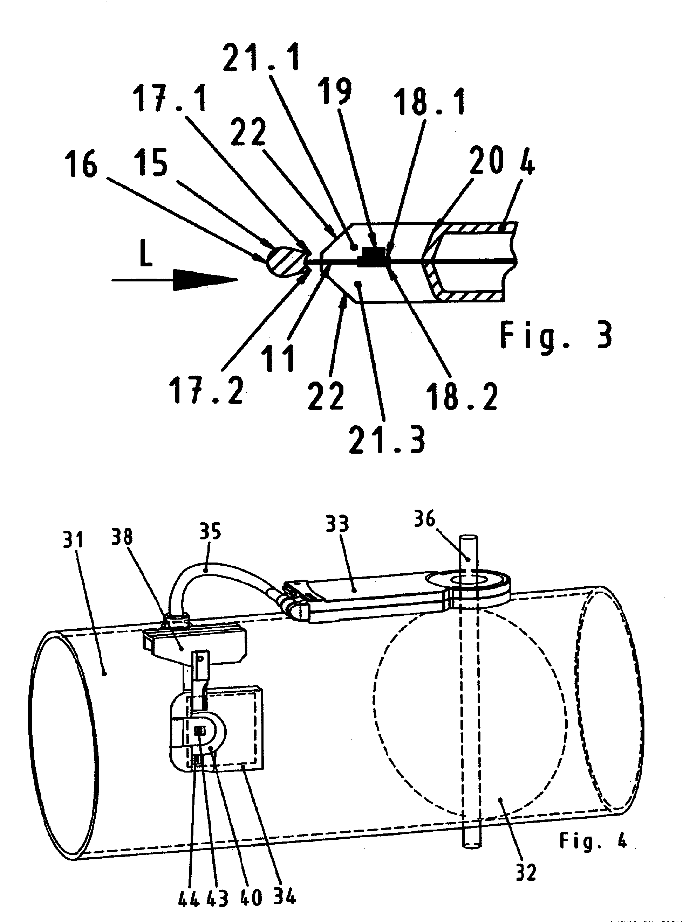

Fig. 3 zeigt die Sensoranordnung im Querschnitt. Es ist die relativ steile Rampe des nachgeordneten Strömungselements 20 erkennbar. Der Neigungswinkel der Rampe beträgt vorzugsweise mindestens 45°, insbesondere mindestens 60° gegenüber der Leiterplatte 11. An dem zur Rampe gegenüberliegenden (d. h. stromaufwärts liegenden) Ende der Leiterplatte 11 ist das Leitelement 15 spiegelsymmetrisch zur Ebene der Leiterplatte 11 angebracht. Das Strömungselement 20 erstreckt sich auf eine grössere Höhe gegenüber der Sensorfläche als das Leitelement 15, d.h. das Strömungselement 20 ist quer zur Strömungsrichtung breiter als das Leitelement 15. Im Querschnitt ist das Leitelement 15 tropfenförmig, zumindest was den stromaufwärts gerichteten Teil des Profils mit der Auffangfläche 16 betrifft. Der stromabwärts liegende Teil des Profils hat zwei Abrisskanten 17.1, 17.2, welche einen gegenseitigen Abstand entsprechend der Summe der Höhe jeder Abrisskante über der Oberfläche der Leiterplatte 11 und der Dicke der Leiterplatte 11 haben. Zwischen den Abrisskanten 17.1, 17.2 besteht kein Bedarf für eine besondere Form. Wichtig ist einzig, dass das Profil des Leitelements 15 so ausgebildet ist, dass die Strömung an den Abrisskanten 17.1, 17.2 abreisst. Im gezeigten Profil ist die Länge des Leitelements 15 (in Strömungsrichtung betrachtet) mehrere Millimeter. Die Breite (senkrecht zur Fläche der Leiterplatte 11) beträgt z.B. einige wenige Millimeter.

Weiter sind in Fig. 3 die auf gegenüberliegenden Seiten der Leiterplatte 11 liegenden seitlichen Strömungsselektionselemente 21.1 und 21.3 zu sehen. Diese sind ebenfalls rampenförmig quer zur Strömungsrichtung L betrachtet. In dem gezeigten Ausführungsbeispiel ist die stromaufwärts liegende Schmalseite 22 des Gehäuses 4 abgeschrägt und bildet eine Rampe für die auftreffende Strömung.

Die Leiterplatte 11 ist beidseitig mit einer Kupferfläche 18.1, 18.2 versehen, welche mit dem SMD-Bauteil 19 thermisch verbunden ist. Die strömungsbedingte Abkühlung kann auf beiden Seiten der Leiterplatte bestimmt werden bzw. es wird ein Durchschnittswert gemessen. Dies macht die Messung zusätzlich robuster gegen Störungen.

Die auf den gegenüberliegenden Seiten der Leiterplatte 11 angeordneten Kupferflächen 18.1, 18.2 brauchen nicht durch Kupferkontakte verbunden zu sein. Wird eine ausreichend dünne Trägerplatte aus geeignetem Kunststoff verwendet, geht die Wärme durch die Leiterplatte 11 hindurch. Indem die Kupferflächen 18.1, 18.2 auf beiden Seiten des Prints vorhanden sind, wird auch beidseitig des Prints gemessen. Voraussetzung dafür ist, dass die Sensorflächen im Wesentlichen parallel zur Strömungsrichtung verlaufen (d.h. dass die Flächennormale senkrecht zur Strömungsrichtung steht.

Fig. 4 zeigt eine weitere Ausführungsform der Erfindung. In dem Lüftungsrohr 31 ist die Lüftungsklappe 32 angeordnet, deren Drehachse 36 durch die Wand des Lüftungsrohrs 31 nach aussen geführt ist. An der Aussenseite des Lüftungsrohrs 31 ist der Antrieb 33 in an sich bekannter Weise mit der Drehachse 36 gekoppelt. Separat vom Antrieb 33 ist das Gehäuse 34 des thermischen Anemometers im Lüftungsrohr 31 montiert. Die Halterung 38 des Gehäuses 34 kann in gleicher Weise ausgeführt sein wie im Zusammenhang mit Fig. 1 erläutert. Für die elektrische Verbindung zwischen Antrieb 33 und thermischem Anemometer ist ein Kabel 35 vorgesehen. Die Ausnehmung 40 im Gehäuse 34, die Anordnung und Ausbildung des Sensorelements 43 und der Temperatursensor 44 können völlig analog zur oben beschriebenen Ausführungsform (Fig. 1-3) sein.

Die erläuterten Ausführungsbeispiele können in vielfältiger Hinsicht abgewandelt werden. Der Antrieb braucht nicht exakt in Längsrichtung im Lüftungskanal angeordnet zu sein. Er kann z.B. auch diagonal zur Strömungsrichtung verlaufen.

Das längliche Antriebsgehäuse liegt beispielsweise leicht schräg, z.B. 10° zur Kanallängsachse und das Anemometer ist an der unteren Ecke des Antriebsgehäuses angebracht. Diese Ecke liegt bei einem Winkel von 10° immer in der Kanalmitte. Vorteil ist eine bessere Ausnützung des Platzes im Antrieb.

Die Halterung 8 kann einen gabelförmigen Träger aufweisen, welcher das flache Gehäuse beidseits umfasst. Während in Fig. 2 die Halterung (bzw. der erwähnte Träger) das Gehäuse an einer stromaufwärts (d.h. hinteren) Ecke hält, kann der Befestigungspunkt statt in der genannten Ecke auch in der Mitte des (in Strömungsrichtung) länglichen Gehäuses sein. Die Strömung trifft dann zuerst auf das Leitelement 15, streift am SMD-Bauteil 19 und dem Strömungselement 20 vorbei, bevor sie zum Bereich gelangt, in welchem die Halterung (bzw. der gabelförmige Träger) am Gehäuse angreift. Der Träger kann dann das Gehäuse umgreifen, ohne dass die Strömung im Bereich des SMD-Bauteils 19 gestört wird. Die Befestigung des Gehäuses am Träger erfolgt im Bereich (z. B. in der Mitte) zwischen dem Strömungselement 20 und der Drehachse 6.

Um eine verstellbare bzw. einstellbare Verbindung zwischen Halterung 8 und Gehäuse 4 zu schaffen, kann z. B. eine Befestigungsschiene vorgesehen sein, welche sich quer zur Längsrichtung des Gehäuses erstreckt (also in radialer Richtung bezüglich des Lüftungsrohrs) und an welcher der z.B. gabelförmige Träger in verschiedenen Positionen (z. B. durch Schrauben oder Klemmen) fixiert werden kann. Mit einer derart einstellbaren Halterung des Gehäuses kann die Position des Anemometers bezüglich des Querschnitts des Lüftungsrohrs justiert werden. Die selbe Halterung kann so für Lüftungsrohre unterschiedlichen Durchmessers optimal eingesetzt werden.

Die Leiterplatte 11 kann mit einer Öffnung bzw. einem Durchbruch versehen sein, welcher stromabwärts bezüglich des SMD-Bauteils 19 ist, d.h. zwischen dem SMD-Bauteil 19 und dem Strömungselement 20. Dies kann den Vorteil haben, dass Verschmutzungen sich nicht am Übergang zwischen Leiterplatte 11 und der rampenartig ansteigenden Gehäusewand beim Strömungselement 20 ablagern können.

Generell liegt der Vorteil des thermischen Anemometers darin, dass weniger Signalwandlungen nötig sind, was weniger Fehlerquellen bedeutet.

Die Cu-Flächen (deren Temperatur bestimmt wird) können sich über einen weiten Bereich des Kanalquerschnittes erstrecken und können so die Strömungswerte mitteln. Die Länge einer Cu-Fläche kann z.B. ein halber Rohrdurchmesser sein. Die Breite der Cu-Fläche beträgt beispielsweise 5 mm. Die Cu-Flächen können aber auch quadratisch sein. Eine grosse Sensorfläche hat den Vorteil, dass eine lokale Verschmutzung (z. B. durch Flusen) des Sensorsignals keine wesentliche Störung des Messsignals bedeutet. Auch die Tatsache, dass die Luft seitlich vorbeiströmt und nicht frontal auf die Sensorfläche trifft, reduziert die Verschmutzungsgefahr, insbesondere auch in Verbindung mit der vorgelagerten Auffangfläche am Leitelement 15. Weiter ist es möglich, die Leiterplatte mit Nanolack und/oder antistatischer Beschichtung zu versehen.

Wenn die ganze Elektronik für die Sensoren und die Steuerung des Antriebs auf engem Raum auf einer Leiterplatte angeordnet sind, wird die Bauweise der ganzen Vorrichtung kompakter. Es kann aber auch vorteilhaft sein, den Volumenstromsensor unabhängig vom Antrieb zu verwenden (z.B. als eine Mess- und Kontrollstelle in einem grösseren Leitsystem einer Heizungs-, Lüftungs und Klimasteuerung).

Anstatt die Abrisskante an einem separaten Leitelement 15 auszubilden, kann die Leiterplatte, auf welcher die Sensorfläche angeordnet ist, bezüglich der Strömungsrichtung (bzw. der Längsmittelachse des Lüftungskanals) schiefgestellt werden, z. B. um 4°. Dies kann ebenfalls starke Wirbel erzeugen und den gewünschten Effekt erzielen.

Es können an einem Antrieb bzw. an einem Gehäuse auch zwei oder mehr thermische Anemometer vorgesehen sein. Insbesondere kann ein erfindungsgemässer Sensor als Baueinheit ausgebildet sein, welche als Modul zu einem Lüftungsklappenantrieb hinzugefügt (z. B. an diesem angesteckt, angeschraubt oder angeklebt) werden kann. Es kann also ein konventioneller Antrieb mit Hilfe des erfindungsgemässen Sensormoduls in eine volumenstromgeregelte Lüftungsklappe umgewandelt werden. Der Antrieb und die Lüftungsklappe können auch wie in der WO 2005/053975 (Belimo) erläutert ausgeführt und eingebaut sein. Insbesondere ist es also nicht zwingend, dass sich das Antriebsgehäuse in Längsrichtung erstreckt. Es ist auch, wie im Stand der Technik gezeigt, eine schräg eingebaute Ausführungsform denkbar.

Das erfindungsgemässe Sensormodul kann über einen Signalausgang verfügen, über welchen die Temperatur im Lüftungskanal an ein zentrales Leitsystem weitergegeben werden kann.

Es sind verschiedenste Anwendungen denkbar. Es kann sogenanntes "Energiemonitoring" gemacht werden zusammen mit dem gemessenen Volumenstrom, indem z. B. ermittelt wird, welches Volumen mit welcher Temperatur in den Raum hinein und wieviel über die abgesaugte Abluft wieder weg geht. Auf diese Weise lässt sich z. B. erkennen, ob ein Fenster weit geöffnet ist. Im Rahmen der Erfindung wird ein System mit dem Antrieb vereint. Das Temperatursignal kann auch dazu dienen, bei Frostgefahr ein Signal an die Lüftungsklappe zu senden, um diese zu schliessen. So kann z.B. verhindert werden, dass ein etwaiger Wärmetauscher einfriert.

Anhand des Temperatursignals kann eine etwaige Rückströmung erkannt werden, z.B. durch einen Temperatursprung (da nun kalte Aussenluft einströmt) bei gleichzeitig niedriger Strömungsgeschwindigkeit.

Es können in einem solchen Gesamtsystem auch weitere Sensoren (Feuchtigkeitssensoren, Gassensoren etc.) integriert werden. Wird mit einem Gassensor (z.B. ein CO2 oder VOC) die Zusammensetzung der Abluft gemessen, kann ein Rückschluss auf die Luftqualität im Raum gezogen werden. Bei schlechter Luftqualität wird z.B. der Volumenstrom erhöht, bei guter reduziert.

Wird ein Bewegungsmelder mit dem Antrieb verbunden, um die Anwesenheit von Personen im belüfteten Raum zu detektieren, kann der Volumenstrom entsprechend anders (z.B. höher) eingestellt werden.

Wenn der Sensor grossflächig verschmutzt wird, werden sich die thermischen Eigenschaften des Sensors verändern. Wenn nun die Beheizung des Sensors entsprechend einem speziellen Testprogramm ein-/ausgeschaltet wird, verändert sich entsprechend auch die Aufwärm und Abkühlzeit. Diese können dann mit Testwerten in sauberem Zustand verglichen werden. Bei Abweichungen kann eine Wartungsmeldung vom Sensor bzw. von der Steuerung des Antriebs aus erfolgen.

Wenn die Klappe geschlossen ist, kann ein Nullpunkt-Reset des Sensors durchgeführt werden. In diesem Sinn kann vorgesehen sein, dass die Lüftungsklappe in gewissen Zeitabständen automatisch schliesst, um den Nullpunkt zu bestimmen.

Im Antrieb kann zusätzlich ein Regler vorgesehen sein, um weitere Antriebe nach dem Master/Slave-Prinzip zu steuern und zu regeln.

Zusammenfassend ist festzustellen, dass gemäss der Erfindung ein Strömungskörper vor der Sensorfläche des thermischen Anemometers eingebaut wird, so dass die Strömung maximal turbulent wird. Dadurch wird das Sensorsignal unabhängig von etwaigen Rohrkrümmern, Kanaleinbauten usw.

## Patentansprüche

1. Vorrichtung zum Messen und Regeln eines Volumenstroms in einem Lüftungsrohr (1), wobei die Vorrichtung derart ausgebildet ist, dass sie vollständig innerhalb des Lüftungsrohrs (1) montierbar ist, umfassend eine im Lüftungsrohr (1) montierbare Lüftungsklappe (2, 32), einen Antrieb zum Betätigen der Lüftungsklappe (2, 32), um dadurch den Volumenstrom zu regeln, und mindestens ein mittels einer Halterung (8, 38) im Lüftungsrohr (1) platzierbares Sensorelement zum Messen des Volumenstroms, wobei das Sensorelement ein thermisches Anemometer (13, 43) mit einer Sensorfläche (18.1, 18.2) ist, **dadurch gekennzeichnet, dass** das thermische Anemometer an einem Gehäuse (4) des Antriebs angeordnet ist, und dass das Gehäuse (4) an der Halterung (8) angebracht ist, welche die Montage des Gehäuses (4) im Lüftungsrohr (1) derart ermöglicht, dass das Sensorelement (13) im Wesentlichen im Zentrum des Lüftungsrohrs (1) platziert werden kann.

2. Vorrichtung nach Anspruch 1, **dadurch gekennzeichnet, dass** die Sensorfläche auf einer bedruckten Leiterplatte ausgebildet ist, wobei die Leiterplatte teilweise innerhalb und teilweise ausserhalb des Gehäuses liegt, und dass vorzugsweise auf der bedruckten Leiterplatte eine elektronische Steuerung vorgesehen ist, um den Volumenstrom mit der Lüftungsklappe (2, 32) entsprechend einem vorgegebenen Sollwert des Volumenstroms zu regeln.

3. Vorrichtung nach einem der Ansprüche 1 bis 2, **dadurch gekennzeichnet, dass** das Sensorelement (13, 43) in einer Ausnehmung (10, 40) des Gehäuses (4, 34) angebracht ist und mit einer innerhalb des Gehäuses (4, 34) angeordneten elektronischen Schaltung (12) verbunden ist.

4. Vorrichtung nach einem der Ansprüche 1 bis 3, **dadurch gekennzeichnet, dass** der Antrieb eine schwenkbare Halterung für die Lüftungsklappe (2, 32) aufweist, an welcher die Lüftungsklappe (2) auswechselbar befestigt ist, so dass die Vorrichtung für verschiedene Querschnitte von Lüftungsrohren einsetzbar ist.

5. Vorrichtung nach einem der Ansprüche 1 bis 4, **dadurch gekennzeichnet, dass** vorgelagert zur Sensorfläche (18.1, 18.2) ein Turbulenzerzeugungselement (17.1) vorgesehen ist, welches derart ausgebildet und von der Sensorfläche (18.1, 18.2) beabstandet ist, dass im Bereich der Sensorfläche (18.1, 18.2) gezielt eine turbulente Strömung erzeugt wird.

6. Vorrichtung nach Anspruch 5, **dadurch gekennzeichnet, dass** das Turbulenzerzeugungselement eine quer zur Strömungsrichtung verlaufende Abrisskante (17.1) ist, welche in Strömungsrichtung (L) um mindestens 3 mm gegenüber der Sensorfläche (18.1) vorgelagert ist und um mindestens 0,5 mm gegenüber der Sensorfläche (18.1) erhöht ist.

7. Vorrichtung nach Anspruch 6, **dadurch gekennzeichnet, dass** nachgelagert zur Sensorfläche (18.1) ein Strömungselement (20) vorgesehen ist, welches sich im Querschnitt in Strömungsrichtung (L) verbreitert, wobei ausgehend von einem Höhenniveau der Sensorfläche (18.1) eine Höhe erreicht wird, welche grösser ist als die Höhe der Abrisskante (17.1) des Turbulenzerzeugungselements gegenüber der Sensorfläche (18.1).

8. Vorrichtung nach Anspruch 7, **dadurch gekennzeichnet, dass** das nachgelagerte Strömungselement (20) einen Abstand von der Sensorfläche (18.1) hat, der mindestens 3 mm beträgt, wobei die Sensorfläche (18.3) in Strömungsrichtung (L) betrachtet vorzugsweise etwa in der Mitte zwischen Abrisskante (17.1) und Strömungselement (20) angeordnet ist.

9. Vorrichtung nach einem der Ansprüche 6 bis 8, **dadurch gekennzeichnet, dass** die Abrisskante (17.1, 17.2) an einem Leitelement (15) ausgebildet ist, welches eine quer zur Strömungsrichtung (L) ausgerichtete Auffangfläche (16) für Schmutzpartikel aufweist.

10. Vorrichtung nach einem der Ansprüche 5 bis 9, **dadurch gekennzeichnet, dass** bezüglich der Strömungsrichtung (L) seitlich der Sensorfläche (18.1) mindestens ein Richtungsselektionselement (21.1, 21.2) vorgesehen ist, um die Messung der Strömung in Längsrichtung des Lüftungsrohrs (1) zu selektionieren.

11. Vorrichtung nach einem der Ansprüche 5 bis 10, **dadurch gekennzeichnet, dass** das Sensorelement ein SMD-Bauteil (19) enthaltend einen Temperatursensor und einen plattenförmigen Träger (11) für das SMD-Bauteil (19) aufweist, wobei der Träger (11) derart mittels der Halterung (8, 28) gehalten ist, dass er beidseits von dem Volumenstrom getroffen werden kann.

12. Vorrichtung nach Anspruch 11, **dadurch gekennzeichnet, dass** das Turbulenzerzeugungselement (17.1, 17.2) und das nachgelagerte Strömungselement (20) im Querschnitt spiegelsymmetrisch bezüglich einer durch den plattenförmigen Träger (11) definierten geometrische Mittelebene ausgebildet sind.

13. Vorrichtung nach einem der Ansprüche 10 bis 12, **dadurch gekennzeichnet, dass** das nachgelagerte Strömungselement (20) und die seitlichen Richtungsselektionselemente (21.1, 21.2) als durchgehende, halbkreisartige kegelmantelförmige Fläche ausgebildet sind.

14. Vorrichtung nach einem der Ansprüche 9 bis 13, **dadurch gekennzeichnet, dass** das Leitelement (15) in seinem bezüglich der Abrisskante (17.1, 17.2) vorgelagerten Bereich im Querschnitt tropfenförmig ist.

15. Vorrichtung nach einem der Ansprüchen 1 bis 14, **dadurch gekennzeichnet, dass** zusätzlich ein Temperatursensor zum Bestimmen der Temperatur des Volumenstroms vorgesehen ist.

16. Vorrichtung nach einem der Ansprüchen 1 bis 15, **dadurch gekennzeichnet, dass** an dem Gehäuse weitere Sensoren für die Luftqualitätsbestimmung angeordnet sind.

17. Vorrichtung nach Anspruch 16, **dadurch gekennzeichnet, dass** die weiteren Sensoren auf der Leiterplatte angeordnet oder elektronisch mit der Leiterplatte verbunden sind.

## Claims

1. Device for measuring and regulating a volume flow in a ventilation pipe (1) the device being designed in such a way that it can be mounted completely within the ventilation pipe (1) comprising a ventilation flap (2, 32) mountable in the ventilation pipe (1), a drive for actuating the ventilation flap (2, 32), in order thereby to regulate the volume flow, and at least one sensor element, capable of being placed in the ventilation pipe (1) by means of a mounting (8, 38), for measuring the volume flow, the sensor element being a thermal anemometer (13, 43) with a sensor surface (18.1, 18.2), **characterized in that** the thermal anemometer is arranged on a housing (4) of the drive, and **in that** the housing (4) is attached to the mounting (8), which makes it possible to mount the housing (4) in the ventilation pipe (1) in such a way that the sensor element (13) can be placed essentially in the center of the ventilation pipe (1).

2. Device according to Claim 1, **characterized in that** the sensor surface is formed on a printed circuit board, the circuit board lying partially inside and partially outside the housing, and **in that** an electronic control is preferably provided on the printed circuit board, in order to regulate the volume flow according to a stipulated desired value of the volume flow by means of the ventilation flap (2, 32).

3. Device according to either one of Claims 1 and 2, **characterized in that** the senator element (13, 43) is attached in a recess (10, 40) of the housing (4, 34) and is connected to an electronic circuit (12) arranged inside the housing (4, 34).

4. Device according to one of Claims 1 to 3, **characterized in that** the drive has a pivotable mounting for the ventilation flap (2, 32), to which the ventilation flap (2) is fastened exchangeably, so that the device can be used for different cross sections of ventilation pipes.

5. Device according to one of Claims 1 to 4, **characterized in that** a turbulence generation element (17.1) is provided, preceding the sensor surface (18.1, 18.2) and is designed and spaced apart from the sensor surface (18.1, 18.2) in such a way that a turbulent flow is generated in a directed manner in the region of the sensor surface (18.1, 18.2),

6. Device according to Claim 5, **characterized in that** the turbulence generation element is a breakaway edge (17.1) which runs transversely with respect to the flow direction and which precedes the sensor surface (18.1) by at least 3 mm in the flow direction (L) and is elevated with respect to the sensor surface (18.1) by at least 0.5 mm.

7. Device according to Claim 6, **characterized in that** a flow element (20) is provided, following the sensor surface (18.1), and widens in cross section in the flow direction (L), starting from a high level of the sensor surface (18.1) a height being reached which is greater than the height of the breakaway edge (17.1) of the turbulence generation element with respect to the sensor surface (18.1).

8. Device according to Claim 7, **characterized in that** the following flow element (20) is at a distance from the sensor surface (18.1), which amounts to at least 3 mm, the sensor surface (18.1) being arranged preferably approximately in the middle between the breakaway edge (17.1) and flow element (20), as seen in the flow direction (L).

9. Device according to one of Claims 6 to 8, **characterized in that** the breakaway edge (17.1, 17.2) is formed on a guide element (15) which has a collecting surface (16) for dirt particles which is oriented transversely with respect to the flow direction (L).

10. Device according to one of Claims 5 to 9, **characterized in that** at least one direction selection element (21.1, 21.2) is provided laterally with respect to the sensor surface (18.1) in relation to the flow direction (L), in order to select the measurement of the flow in the longitudinal direction of the ventilation pipe (1).

11. Device according to one of Claims 5 to 10, **characterized in that** the sensor element has an SMD component (19) containing a temperature sensor and a plate-shaped carrier (11) for the SMD component (19), the carrier (11) being held by means of the mounting (8, 28) in such a way that the volume flow can meet said carrier on both sides.

12. Device according to Claim 11, **characterized in that** the turbulence generation element (17.1, 17.2) and the following flow element (20) are designed mirror-symmetrically in cross section with respect to a geometric mid-plane defined by the plate-shaped carrier (11).

13. Device according to one of Claims 10 to 12, **characterized in that** the following flow element (20) and the lateral direction selection elements (21.1, 21.2) are designed as a continuous, semicircle-like surface taking the form of a cone envelope.

14. Device according to one of Claims 9 to 13, **characterized in that** the guide element (15) is drop-shaped in cross section in its region preceding the breakaway edge (17.1, 17.2).

15. Device according to one of Claims 1 - 14, **characterized in that** a temperature sensor for determining the temperature of the volume flow is additionally provided.

16. Device according to one of Claims 1 - 15, **characterized in that** further sensors for determining the air quality are arranged on the housing.

17. Device according to Claim 16, **characterized in that** the further sensors are arranged on the circuit board or are connected electronically to the circuit board.

## Revendications

1. Dispositif pour mesurer et réguler un écoulement volumique dans un conduit de ventilation (1), le dispositif étant réalisé de telle sorte qu'il puisse être monté complètement à l'intérieur du conduit de ventilation (1), comprenant un volet de ventilation (2, 32) pouvant être monté dans le conduit de ventilation (1), un entraînement pour actionneur le volet de ventilation (2, 32), afin de réguler ainsi l'écoulement volumique, et au moins un élément de capteur pouvant être placé au moyen d'une fixation (8, 38) dans le conduit de ventilation (1) pour mesurer l'écoulement volumique, l'élément de capteur étant un anémomètre thermique (13, 43) avec une surface de capteur (18.1, 18.2), **caractérisé en ce que** l'anémomètre thermique est disposé au niveau d'un boîtier (4) de l'entraînement, et **en ce que** le boîtier (4) est monté sur la fixation (8) qui permet le montage du boîtier (4) dans le conduit de ventilation (1) de telle aorte que l'élément de capteur (13) puisse être placé sensiblement au centre du conduit de ventilation (1).

2. Dispositif selon la revendication 1, **caractérisé en ce que** la surface de capteur est réalisée sur une carte à circuits imprimés, à carte à circuits imprimés étant située en partie à l'intérieur et en partie à l'extérieur du boîtier, et **en ce que** de préférence une commande électronique est prévue sur la carte à circuits imprimés, afin de réguler l'écoulement volumique avec le volet de ventilation (2, 32) de marnière correspondant à une valeur de consigne prédéfinie de l'écoulement volumique.

3. Dispositif selon l'une quelconque des revendications 1 et 2, **caractérisé en ce que** l'élément de capteur (13, 43) est monté dans un évidement (10, 40) du boîtier (4, 34) et est connecté à un circuit électronique (12) disposé à l'intérieur du boîtier (4, 34).

4. Dispositif selon l'une quelconque des revendications 1 à 3, **caractérisé en ce que** l'entraînement présente une fixation pivotante pour le volet de ventilation (2, 32), au niveau de laquelle le volet de ventilation (2) est fixé de manière remplaçable, de telle sorte que le dispositif puisse être utilisé pour différentes sections transversales de conduits de ventilation.

5. Dispositif selon l'une quelconque des revendications 1 à 4, **caractérisé en ce qu'**en amont de la surface de capteur (18.1, 18.2) est prévu un élément de génération de turbulences (17.1) qui est réalisé et espacé de à surface de capteur (18.1, 18.2) de telle sorte qu'un écoulement turbulent soit généré de manière ciblée dans la région de la surface de capteur (18.1, 18.2).

6. Dispositif selon la revendication 5, **caractérisé en ce que** l'élément de génération de turbulences est un bord de rupture (17.1) s'étendant transversalement à la direction d'écoulement, lequel est monté à au moins 3 mm en amont par rapport à la surface de capteur (18.1) dans la direction d'écoulement (L) et lequel est surélevé d'au moins 0,5 mm par rapport à la surface de capteur (18.1).

7. Dispositif selon la revendication 6, **caractérisé en ce qu'**un élément d'écoulement (20) est prévu en aval de la surface de capteur (18.1), lequel s'élargit dans la direction d'écoulement (L) en section transversale, une hauteur étant atteinte à partir d'un niveau en hauteur de la surface de capteur (18.1), laquelle est supérieure à à hauteur du bord de rupture (17.1) de l'élément de génération de turbulences par rapport à la surface de capteur (18.1).

8. Dispositif selon la revendication 7, **caractérisé en ce que** l'élément d'écoulement (20) monté en aval présente une distance par rapport à la surface de capteur (18.1) qui vaut au moins 3 mm, la surface de capteur (18.1), considérée dans la direction d'écoulement (L), étant disposée de préférence approximativement au centre entre le bord de rupture (17.1) et l'élément d'écoulement (20).

9. Dispositif selon l'une quelconque des revendications 6 à 8, **caractérisé en ce que** le bord de rupture (17.1, 17.2) est réalisé sur un élément directeur (15) qui présente une surface de collecte (16) pour des particules de saleté qui est orientée transversalement par rapport à la direction d'écoulement (L).

10. Dispositif selon l'une quelconque des revendications 5 à 9, **caractérisé en ce que** par rapport à la direction d'écoulement (L) latéralement à la surface de capteur (18.1), au moins un élément de sélection de direction (21.1, 21.2) est prévu, afin de sélectionner la mesure de l'écoulement dans la direction longitudinale du conduit de ventilation (1).

11. Dispositif selon l'une quelconque des revendications 5 à 10, **caractérisé en ce que** l'élément de capteur, contenant un composant à monter en surface (19), présente un capteur de température et un support en forme de plaque (11) pour le composant à monter en surface (19), le support (11) étant retenu au moyen de la fixation (8, 28) de telle sorte qu'il puisse être frappé des deux côtés par l'écoulement volumique.

12. Dispositif selon la revendication 11, **caractérisé en ce que** l'élément de génération de turbulences (17.1, 17.2) et l'élément d'écoulement (20) monté en aval sont réalisés avec une symétrie spéculaire en section transversale par rapport à un plan médian géométrique défini par le support en forme de plaque (11).

13. Dispositif selon l'une quelconque des revendications 10 à 12, **caractérisé en ce que** l'élément d'écoulement (20) monté en aval et les éléments de sélection de direction latéraux (21.1, 21.2) sont réalisés sous forme de surface continue en forme d'enveloppe conique de type semi-circulaire.

14. Dispositif selon l'une quelconque des revendications 9 à 13, **caractérisé en ce que** l'élément directeur (15) a une section transversale en forme de goutte dans sa région montée en amont par rapport au bord de rupture (17.1, 17.2).

15. Dispositif selon l'une quelconque des revendications 1 à 14, **caractérisé en ce qu'**il est prévu en outre un capteur de température pour déterminer la température de l'écoulement volumique.

16. Dispositif selon l'une quelconque des revendications 1 à 15, **caractérisé en ce que** d'autres capteurs sont disposés au niveau du boîtier pour déterminer la qualité de l'air.

17. Dispositif selon la revendication 16, **caractérisé en ce que** les autres capteurs sont disposés sur la carte à circuits imprimés ou sont connectés électroniquement à la carte à circuits imprimés.
